(19) Europäisches Patentamt
European Patent Office
Office européen des brevets

(11) EP 2 833 990 B1

(12) **EUROPEAN PATENT SPECIFICATION**

(45) Date of publication and mention of the grant of the patent:
**30.03.2016 Bulletin 2016/13**

(21) Application number: **13725484.3**

(22) Date of filing: **03.04.2013**

(51) Int Cl.:
***B01D 67/00*** *(2006.01)* ***B01D 69/12*** *(2006.01)*
***B01D 71/56*** *(2006.01)* ***B01D 65/08*** *(2006.01)*

(86) International application number:
**PCT/IN2013/000222**

(87) International publication number:
**WO 2013/150548 (10.10.2013 Gazette 2013/41)**

(54) **METHOD OF PREPARATION OF A THIN FILM COMPOSITE REVERSE OSMOSIS MEMBRANE WITH ANTIFOULING PROPERTIES**

VERFAHREN ZUR HERSTELLUNG EINER DÜNNSCHICHT-VERBUNDMEMBRAN ZUR UMKEHROSMOSE MIT ANTIFOULING-EIGENSCHAFTEN

PROCÉDÉ DE PRÉPARATION D'UNE MEMBRANE D'OSMOSE INVERSE COMPOSITE À FILM MINCE AYANT DES PROPRIÉTÉS ANTI-SALISSURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2012 IN DE10272012**

(43) Date of publication of application:
**11.02.2015 Bulletin 2015/07**

(73) Proprietor: **Council of Scientific & Industrial Research**
**An Indian registered body incorporated under the Registration of Societies Act (Act XXI of 1860)**
**New Delhi 110 001 (IN)**

(72) Inventors:
- **GHOSH, Pushpito, Kumar**
  **Bhavnagar 364002**
  **Gujarat (IN)**
- **JEWRAJKA, Suresh, Kumar**
  **Bhavnagar 364002**
  **Gujarat (IN)**
- **REDDY, Alamuru, Venkata, Rami**
  **Bhavnagar 364002**
  **Gujarat (IN)**
- **HALDAR, Soumya**
  **Bhavnagar 364002**
  **Gujarat (IN)**
- **MANDAL, Sanjay**
  **Chandigarh 160019 (IN)**
- **KHULLAR, Sadhika**
  **Chandigarh 160019 (IN)**

(74) Representative: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) References cited:
**AU-A1- 2012 200 036** **US-A- 5 160 619**
**US-A1- 2010 006 495**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 833 990 B1

## Description

The following specification particularly describes the nature of the invention and the manner in which it is to be performed:

## FIELD OF THE INVENTION

The present invention relates to the preparation of thin film composite reverse osmosis (TFC-RO) membranes with enhanced anti-biofouling property. Particularly, the invention relates to the preparation of such membranes wherein nitrogen-bearing aromatic ring structures known to impart biocidal activity are incorporated in full or in part in one or both reactants, namely the amine-bearing and acid chloride bearing comonomers. More particularly, such enhanced anti-biofouling activity is achieved without compromising the salt rejection efficiency and flux of the membranes.

## BACKGROUND OF THE INVENTION

A thin selective (selective to ions) semipermeable film when formed over a porous support is called TFC membrane. Most of the TFC membranes are prepared by rapid reaction between monomers via interfacial polymerization. For example, reaction between diamine which is taken in water and multifunctional acid chloride which is taken in water immiscible solvent such as hexane. Thus due to diffusion of monomers in the interfacial zone rapid reaction takes place. Because of limited diffusion of monomer towards interfacial zone, a thin film is formed on the top of a support comprising a layer of polysulfone (PSf) cast on a non-woven fabric support. TFC consisting of cross-linked polyamide network is used in water desalination application. In general, most of the successful TFC-RO membranes are prepared by interfacial polymerization between suitably suitably benzene ring structures, typically three acid chloride groups substituted in a benzene ring as one monomer and two primary amine groups substituted in another benzene ring as a second monomer. It is also important that such substitution must be regiospecific, i.e., the three add chloride groups at 1,3,5 positions and the two amine groups at m-position to one another. For the improvement of performance, dimethylsulfoxide (DMSO), camphor sulfonic acid, and N-methyl pyrrolidone (NMP) are employed as additives.

Patent No. WO/2007/035019 describes the preparation of TFC RO membrane with polyamide active layer. The polymide layer was prepared through interfacial polymerization of an aqueous polyfunctional amine solution with organic solution containing polyfunctional acyl halide. The post-treatment of the resulting polyamide membrane was performed with 0.1 to 100 wt% of polyfunctional tertiary alcohol amine like N,N-dialkyl ethanolamine, N,N-dimethylethanolamine; tetraalkylammonium hydroxide, tetra-methyl ammonium hydroxide, tetra-ethyl-ammonium hydroxide, and tetra-propyl ammonium hydroxide and so on. The main limitation of the method is that it involves an additional step of treatment of the composite membrane with highly carcinogenic amines.

US patent 7081202 assigned to Nitto Denko Corporation discloses the preparation of TFC RO membrane by interfacial polymerization of polyfunctional amine monomers containing heteroatom like O, N, S in the chain with different aliphatic carboxylic acid chlorides.

US patent no. 682727 describes the TFC RO membrane having antifouling coating over the top of polyamide active layer. The method involves the preparation of polyamide TFC membrane according to interfacial polymerization of multifunctional amine with multifunctional acid chloride and subsequent modification with compounds containing antifouling properties.

US patent 5254261 discloses the method for the preparation of TFC RO membranes containing polyamide active layer of the reaction product of polyfunctional amine with cycloaliphatic acyl chlorides such as 1-cis, 2-trans, 3-cis, 4-trans-cyclopentane tetracarboxylic acid chloride, 1-cis, 2-trans, 3-cis, 4-trans-cyclobutane tetracarboxylic acid chloride and 1-cis, 2-trans, 4-cis-cyclopentane tri-carboxylic acid chloride. A trifunctional amine such as Melamine was used for the interfacial polymerization with conventional trimesoyl chloride (TMC) for the preparation of nanofiltration membrane. The TFC formed with Melamine and TMC exhibited poor NaCl rejection [Runlin Han, Journal of Membrane Science 425-426 (2013) 176-181].

US patent 5876602 discloses the process for making high flux TFC RO membrane involving the preparation of polyamide active layer over polysulfone support according to the usual interfacial polymerization technique followed by the treatment of the polyamide active layer with oxidising agents.

US patent 4913816 discloses the method for the preparation of chlorine tolerant composite semipermeable membrane using secondary amine group to obtain chlorine resistant nature.

US patent 5693227 discloses the preparation of TFC membranes by the interfacial polymerization between amines and acid chlorides in presence of tertiary aminopyridines as catalysts. This patent application listed several amines and acid chlorides for the preparation of polyamide films in presence of catalyst. Melamine and pyridine tricarboxylic acid chloride are also included among the various monomers listed in this patent. Akin to US patent 5693227, US20070039874A1 also lists melamine and pyridine tricarboxylic acid chloride among a large number of monomers

that were employed in the subject matter of the invention. Both of the above prior art do not bring out any specific advantages or disadvantages from the use of such monomers and how they are deployed. Neither is there any information provided on critically important membrane properties such as flux, salt rejection efficiency and anti-biofouling activity. US patent 5693227 also does not disclose whether membranes containing such monomers can be prepared without deliberate addition of any catalyst.

Most membranes, including TFC membranes, undergo undesirable fouling by abiotic and biotic materials. These materials deposit on the membrane surface and reduce the system efficiency over time [Flemming, Exp. Therm. Fluid Sci.14 (1997) 382-391; Ahmad et.al. Desalination 132 (2000)173-179]. Indeed, membrane biofouling is one of the major problems resulting in the decline of flux and rejection efficiency and the eventual discarding of the modules [Schneider et,al. J. Membr. Sci. 261 (2005) 152-162; Herzberg, et.al. J. Membr. Sci. 295 (2007) 11-20]. Biofouling phenomenon on membrane surfaces may occur through a two-step process: (1) initial adhesion of microorganisms and (2) formation of biofilm by reproduction of attached cells [Herzberg et.al. J. Membr. Sci. 295 (2007) 11-20]. Disinfection and removal of formed bio-film in NF or RO systems is difficult with chlorine as it may damage the polymer, and back washing is ineffective beyond a point [Eshed et.al. Appl. Environ. Microbiol. 74 (2008) 7338-7347]. Therefore, membrane with anti-fouling and bactericidal properties is desirable with self-cleaning attribute and, consequently, long-term usability. Surface modification of membranes is an attractive approach to mitigating of biofouling. However, the use of this approach for NF/RO membranes is limited due to lowering of performance owing to surface modification [Belfer et.al. J. Membr. Sci. 139 (1998) 175-181; Sarkar et.al. J. Membr. Sci. 349 (2010) 421-428; Sagle et.al. J. Membr. Sci. 340 (2009) 92-108]. Bernstein et al. reported the concentration polarization-enhanced radical graft polymerization technique for the surface modification of RO membrane by charged polymers (cationic, anionic and zwetterionic) to minimize the bacterial adhesion on the membrane surface. Art low grafting density the modified membranes were reported to retain similar rejection with 20-40% decline in flux [Environ. Sci. Technol. 45 (2011) 5973-5980].

To induce antibacterial activity we disclose here the novel use of nitrogen-bearing heterocyclic aromatic structures as monomers to impart biocidal activity. Such enhanced anti-biofouling activity is achieved without compromising the salt rejection efficiency and flux of the membranes.

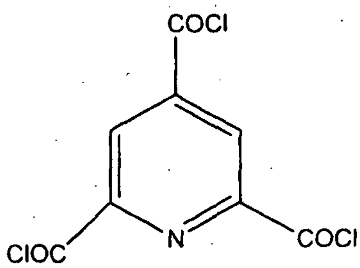

PTC

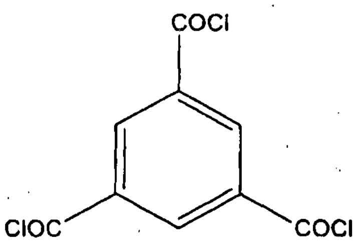

TMC

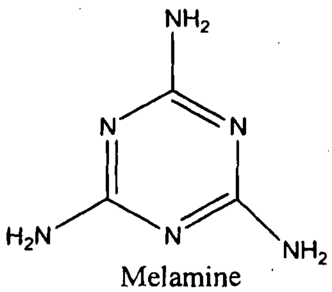

Melamine

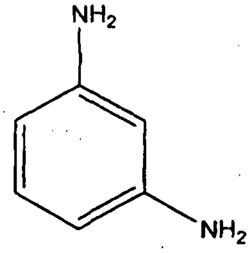

MPD

AU 2012 00036 discloses the use of MPD and TMC. US5160619 discloses further melamine as a substitute for MPD.

## OBJECTS OF THE INVENTION

The main object of the present invention is to provide thin film composite TFC RO membrane with inherent antimicrobial property.

Another object of the present invention is to provide a process for the preparation of TFC RO membrane with inherent antimicrobial property.

Another object of the present invention is to use the monomer constituents themselves to impart such property.

Still another object of the present invention is to use a monomer which has a quaternizable site.

Still another object of the present invention is to use pyridine tricarboxylic acid chloride as one such monomer with or without trimesoyl chloride, and prepare polyamide membranes through reaction with m-phenylene diamine (MPD).

Still another object of the present invention is to use melamine or mixture of melamine and MPD as the amine source.

Still another object of the present invention is to prepare TFC wherein both the acid chloride and amine monomers contain in part or in full pyridine tricarboxylic acid chloride and melamine along with conventionally used monomers.

Still another object of the present invention is to prepare such membrane without compromising on the flux and salt rejection properties of the membrane.

Still another object of the present invention of the present invention is to utilise conventional hardware and process for the purpose of preparing the membrane.

## BRIEF DESCRIPTION OF THE DRAWINGS

Figure 1 shows a bar chart of bacterial attachment on the membrane surfaces of Examples 2, 4 and 5 when the membranes were immersed in diluted natural seawater (7500 ppm) containing bacteria.

Figure 2 shows a bar chart of bacterial attachment on the membrane surfaces of Examples 2, 4 and 5 when marine bacteria taken in natural seawater.

Figure 3 shows a bar chart of bacterial attachment on the membrane surfaces of Examples 2 and Example 8 when the experiments were conducted immersing the membranes in seawater containing the marine bacteria *Vibrio harveyi*.

## SUMMARY OF THE INVENTION

Accordingly, present invention provides thin film composite (TFC) reverse osmosis (RO) membrane on a support wherein membrane comprises polyfunctional acid chloride(s) and polyfunctional amine(s) in the ratio ranging between 3:1 to 1:1 with enhanced antibiofouling property according to claim 1,

The polyfunctional amine(s) is/are selected from *m*-phenylene diamine (MPD) or melamine or combination thereof.

The polyfunctional acid chloride(s) is/are selected from trimesoyl chloride (TMC) or acid chloride of pyridine tricarboxylic acid (PTC) or combination thereof.

In embodiment of the present invention, support used is polysulfone membrane of overall thickness 140-160 micrometer, polysulfone thickness in the range of 30-40 micrometer, water flux in the range of 300-500 $LM^{-2}h^{-1}$ and molecular weight cut off in the range of 120000-150000 g/mol.

In yet another embodiment of the present invention, thickness, water flux and molecular weight cut off of polysulfone membrane used is in the range of 30-40 micrometer, 300-500 $LM^{-2}h^{-1}$ and 120000-150000 g/mol respectively.

In yet another embodiment of the present invention, total concentration of amine(s) taken in the bath is in the range of 1.5-2.5% (w/v).

In yet another embodiment of the present invention, the glycerol and DMSO concentrations in the amine bath are in the range of 0.4-0.6% (w/v) and 0.8-1.2% (w/v) respectively.

In yet another embodiment of the present invention, total concentration of acid chloride(s) taken in the bath is in the range of 0.10-0.15% (w/v).

In yet another embodiment of the present invention, the temperature of the amine bath is in the range of 50-70°C when melamine was incorporated as one of the amines and the bath temperature was ambient in other cases.

In yet another embodiment of the present invention, the temperature of the acid chloride bath is in the range of 25-35 °C in all cases.

In yet another embodiment of the present invention, with MPD as the amine monomer taken at 2% (w/v) concentration in water, a mixture of TMC and PTC taken in the weight ratio of 3:2 to 1:1 (w/w) and total concentration 0.1% (w/v) in 93:7 (v/v) hexane : dichloromethane, gave a membrane having flux of 50-55 $Lm^{-2}h^{-1}$ and NaCl rejection efficiency of 92-93%, which was similar to that of conventional TFC membrane, while exhibiting 10-1000 fold lower attachment of bacteria on the surface.

In yet another embodiment of the present invention, with TMC as the acid chloride monomer taken at 0.15% (w/v) concentration in hexane, a mixture of MPD and melamine taken in the weight ratio of 3:7 to 1:1 (w/w) and total concentration of 2% (w/v) in water, gave a membrane having flux of 40-45 $Lm^{-2}h^{-1}$ and NaCl rejection efficiency of

93-96%, which was similar to that of conventional TFC membrane, while exhibiting 10-100 fold lower attachment of bacteria on the surface.

In yet another embodiment of the present invention, the bacteria which exhibited reduced attachment in the membranes of the present invention include *E. coli, B. subtilis* and the marine bacteria *Vibrio harveyi.*

## DETAIL DESCRIPTION OF THE INVENTION

The present invention relates to the preparation of novel antibiofouling TFC RO membrane on porous polysulfone (PSf) support for water purification. First, PSf porous support having about 30-40 micron thickness was prepared on a non-woven polyester fabric using a semi-automated casting unit. TFC-RO membranes with different composition of polyamide network were then prepared by interfacial polymerization between neat m-phenylenediamine (MPD) and a mixture of pyridine tricarboxylic acid chloride (PTC) and trimesoyl chloride (TMC). A mixture of solvent such as hexane/dichloromethane (DMC) (hexane : DMC = 93:7 v/v) was used for the solubilization of PTC whereas MPD was directly solubilized in water. Glycerol 0.5% (w/v) and dimethyl sulphoxide 1% (w/v) were additionally taken in the MPD bath. Besides exhibiting higher reactivity towards MPD, the resultant TFC membrane exhibited lower tendency towards bacterial attachment in comparison to the membrane prepared with TMC alone. The best results were obtained with 2:3-1:1 molar ratio of PTC to TMC, in as much as the flux was also enhanced and the salt rejection efficiency remained almost unaffected. For example, the developed membranes exhibited range of NaCl rejections depending on the compositions: TFC membranes prepared by mixtures of PTC + TMC exhibited NaCl rejection of 92% with 51 $LM^{-2}h^{-1}$ flux when tested under brackish water desalination conditions. The surface of TFC membrane, prepared with PTC can be derivatized by reacting with alkyl halide to induce permanent positive charge on the membrane surface for further enhancement of antibacterial properties.

The present invention also relates to the preparation of antibiofouling TFC membranes by the interfacial polymerization between mixture of Melamine + MPD with TMC. The mixture MPD + melamine was dissolved in hot water (50 -60 °C) whereas the TMC was dissolved in neat hexane for the interfacial polymerization. The best results in terms of antibiofouling property, NaCl rejection and flux was obtained with 1:1 wt ratio of MPD to melamine. The resultant TFC exhibited flux and NaCl rejection of 40 $LM^{-2}h^{-1}$ and 95%, respectively.

## FEATURES OF THE INVENTION

The main preassumption are the following:

1. Recognising that monomers can be designed to have added functionality other than merely for the task of obtaining a polymer network with salt rejection property.
2. Recognising further that the substitution of the phenyl ring in trimosoyl chloride with a pyridyl ring can impart such added functionality, particularly the important attribute of antibiofouling property.
3. Using a mixed solvent for better solubilisation of the above monomer.
4. Recognising that the substitution of the phenyl ring in MPD with a triazole ring can also provide TFC membranes with enhanced antibiofouling properties.
5. Elevating the temperature of amine bath containing either melamine or mixture of melamine and MPD.
6. Using the monomer in combination with conventionally used trimesoyl chloride to obtain the best overall performance considering jointly the three critical parameters, namely, flux, salt rejection and anti-biofouling behaviour.

The present invention relates to the process for the preparation of antibiofouling TFC-RO membrane for water desalination/purification by in situ interfacial polymerization between two monomers namely diamine (MPD) which was taken in water and two different acid chloride (PTC+TMC) taken in mixture of hexane and dichloromethane. The present invention also relates to the preparation TFC membranes by the interfacial polymerization between mixtures of monomers such as melamine + MPD and TMC. Dimethylsulfoxide (DMSO) and glycerol were extraneously added to the amine solution for the interfacial polymerization.

## MATERIALS AND METHODS EMPLOYED IN THE PRESENT INVENTION

2,4,6-pyridinetricarboxylic acid (PTC) (2 g) prepared in the laboratory was taken in a dry round bottom flask equipped with bar magnet. Into it distilled thionyl chloride (10 mole equivalent) and a drop of DMF were added. The mixture was refluxed for 5 h. Thereafter excess thionyl chloride was removed, the product was vacuum-dried and used in fresh state. NMR in $CDCl_3$: $\delta$ = 8.9 ppm for 3H of PTC. Trimesoyl chloride (TMC), m-phenylene diamine (MPD) and melamine were procured from commercial sources and used.

## PREPARATION OF POLYSULFONE (PSF) SUPPORT MEMBRANE

PSf support membrane employed in the invention was prepared on non-woven fabric of 100-110 micrometer thickness by phase inversion method using semi-automated casting machine. Briefly, PSf was dissolved in DMF at concentration of 14 wt% under stirring at 70 °C to prepare the casting solution. The solution was settled for 12 h at room temperature (25-35°C) to allow complete release of bubbles. After that, the PSf solution was cast on the non-woven fabric by semiautomatic blade casting machine at 4 m/min. The gap of the blade from the platform surface was adjusted such that the thickness of the membranes was 30-40 μm excluding fabric thickness. The fabric was then passed through a gelation bath containing 0.1 % (w/v) sodium lauryl sulphate in $H_2O$/DMF ($H_2O$:DMF = 96:4 v/v). The cast PSf was then washed with water and stored in RO-filtered water. Thickness of the resultant PSf layer was 30-40 micron, the molecular weight cutoff was 120000-150000 g/mol and the water flux was 300-500 $LM^{-2}h^{-1}$.

## EVALUATION OF MEMBRANE PERFORMANCE

The performance of the membranes was evaluated in a reverse osmosis test kit for brackish water desalination using 1500 ppm NaCl feed solution and 2000 ppm NaCl feed solution. The test kit consisted of four SS361 cells connected in series. The cell could accommodate circular membrane coupons of 3.5 cm dia (15 $cm^2$). The kit was additionally equipped with high pressure pump, pressure gauge, pressure-control valve and conductivity meter. The feed flow occurred in the cross-flow mode in the test kit. After fixing the membrane circles in the test cells, pure water was permeated initially at 250 psi for 30 min., to obtain steady flux. Then, the permeation of the salt solution was undertaken at 200 psi and the flux and rejection were measured. The permeate flux was calculated using the following equation:

$$\text{Permeate Flux } J = V/At,$$

where J is the permeate flux ($L/m^2.h$); V is the volume of water permeated (L), A is the membrane area ($m^2$) and t is the permeate time (h). The salt concentrations in the feed and permeate were determined by measuring the electrical conductivity of the solutions using digital conductivity meter. The salt rejection was determined using the following expression: Solute rejection SR% = $1-C_p/C_f x100$; $C_f$ and Cp are salt concentrations in the feed and permeate, respectively.

## EVALUATION OF BACTERIAL ATTACHMENT

The prevention of biofilm formation or antimicrobial activity of various TFC membranes was quantitatively determined in terms of CFU/mL by counting the number of bacteria attached on membranes or film surfaces. The antimicrobial activity of various TFC membranes was determined by submerging the membranes in diluted sea water (7500 ppm) containing bacteria. One gram-positive bacteria (*Bacillus subtilis,* NCIM2920) and one gram-negative bacteria (*Escherichia coli,* NCIM2065) were selected for this study. Single colonies of both strains were cultured in Luria Bertani (LB) broth (Himedia, India) at 37 °C in constant shaking condition at 80 rpm overnight. Next, optical density (OD) was adjusted to 1 ($OD_{600}$) with physiological saline (0.9 wt % NaCl) and 10 μL each of these bacterial cultures were inoculated into 7 pairs of conical flasks with 50 mL freshly prepared LB broth in each flask. Approximately 25 $cm^2$ size of each membrane and film were autoclaved and dipped completely into the broth culture in sterile condition. One set of flasks was inoculated with *B subtilis* and the other set with *E. coli*. Inoculated flasks were initially kept in incubator shaker at 80 rpm for 48 hrs and then in stationary condition up to 7 days. All the experiments were carried out in sterile conditions. The bacterial count on the surrounding medium was determined to be $7.8X10^9$ CFU/mL and $4.3X10^{11}$ CFU/mL for *B. subtilis and E. Coli,* respectively. After 7 days of incubation, membranes were taken out with sterile forceps and loosely attached bacteria were removed by gentle washing with autoclaved physiological saline. Subsequently, 1$cm^2$ area from each membrane was scraped with sterile cotton swabs and was plated in LB agar plate with suitable dilution by physiological saline. Bacterial counts in 1 $cm^2$ area in each membrane were determined.

Bacterial attachment was also studied using the marine bacteria *Vibrio harveyi* and natural seawater (30,000 ppm salinity). Experiments were carried out after filtering and autoclaving the sea water. The procedure followed was similar as in the above cases for assessment of antimicrobial activity of the different TFC membranes.

## EXAMPLES

The following examples are given by way of illustration and therefore should not be construed to limit the scope of the present invention.

Examples 1-3 are comparative examples not falling under the invention.

**Example 1 Comparative**

In this example, polyamide active layer on the top of the porous PSf support was prepared by *in situ* interfacial polymerization of MPD with TMC. A 2 % (w/v) aqueous MPD solution was prepared in RO filtered water. TMC (0.5 g) was dissolved in 1 L of a mixed solvent comprising 93:7 (v/v) hexane : dichloromethane under stirring. The solution was then filtered to remove un-dissolved matter, if any. Next, the water wetted microporous PSf supporting membrane was carefully attached on a glass slide, and was dipped into the aqueous solution of MPD (2 % w/v) containing DMSO (1 wt%) and glycerol (0.5 wt%) at 35°C. The membrane was allowed to soak for at least 20s. The attached MPD-soaked membrane was then removed from the solution. The surface of the membrane was then gently rolled with a rubber roller to eliminate small bubbles which may have formed form during the process of soaking: Excess solution was drained from the surface by standing till no liquid remained. Afterwards, the MPD absorbed membrane was dipped into the solution of TMC and kept for 40 s which resulted in the formation of a thin film over the PSf support. The membrane was heat cured at 70 °C for 2 minutes. The TFC membrane was then washed with cold water, cold citric acid (0.1 wt%) solution and cold water, respectively, for about 5 min in each solution for the removal of un-reacted MPD which may be present in the polysulfone support. Finally, the membrane was treated with the solution of 10 wt% aqueous glycerol and then dried at 50 °C. When coupons of the membrane were tested in a cross flow kit under standard condition (1500 ppm NaCl; 200 psi; T=28-30°C), the average flux and NaCl rejection were 23 $LM^{-2}h^{-1}$ and 73% respectively.

**Example 2 Comparative**

The experiment of Example 1 was repeated with double (1.0 g) the amount of TMC. The average flux and NaCl rejection were 42 $LM^{-2}h^{-1}$ and 94%, respectively.

Example 1 teaches us that the concentration of 0.05% (w/v) of acid chloride is too low to obtain a membrane with good flux and salt rejection efficiency whereas Example 2 teaches us that satisfactory performance is obtained when the acid chloride concentration is raised to 0.1% (w/v).

**Example 3 Comparative**

The experiment of Example 2 was repeated with PTC in place of TMC. The only minor difference was that the PTC (1 g) was first dissolved in 70 mL DCM and then added into 970 mL hexane to obtain the same final 93:7 hexane : DCM ratio. The average flux and NaCl rejection were 34 $LM^{-2}h^{-1}$ and 78% respectively.

Example 3 teaches us that when PTC is used as the sole acid chloride, an inferior quality of membrane is obtained compared to the one in Example 2.

**Example 4**

The experiment of Example 2 was repeated using a 1:1 (w/w) mixture of TMC and PTC in place of TMC. The total weight of acid chloride was maintained at 1 g. The PTC was dissolved in 70 mL DCM while the TMC was dissolved in 970 mL hexane and the two solutions then mixed to obtain the same final 93:7 hexane : DCM ratio as in Examples 1-3 above. The average flux and NaCl rejection were 51 $LM^{-2}h^{-1}$ and 92%, respectively. Example 4 teaches us that a combination of TMC and PTC yields a membrane having similar performance as the one in Example 2.

**Example 5**

The membrane of Example 4 was quaternized by first dipping it in 0.01 % (w/v) NaOH solution for 5 minutes, washed with water and drying in air. The air dried TFC was then submerged in 98:2 (v/v) hexane-DMF containing methyl iodide (2% w/v). The contact time was 10 minutes. The membrane was then removed and dried in air. Next the membrane was washed several times with water and stored in water. The average flux and NaCl rejection were 42 $LM^{-2}h^{-1}$ and 92%, respectively.

**Example 6**

Figure 1 shows a bar chart of bacterial attachment on the membrane surfaces of Examples 2, 4 and 5 when the membranes were immersed in diluted natural seawater (7500 ppm) containing bacteria. Figure 2 shows a similar bar chart of bacterial attachment with marine bacteria taken in natural seawater. It can be seen from the Figures that the membrane of Example 4 is superior to the one of Example 2 in as much as bacterial attachment is reduced. It can also be seen that the effect is more pronounced with the membrane of Example 5, i.e., when the pyridyl nitrogen in PTC is quaterinized.

Examples 2-5 teach us that the anti-biofouling property of TFC membrane can be enhanced by substituting half the amount of TMC with PTC without adverse effect on the flux and salt rejection efficiency.

**Example 7**

The experiment of Example 2 was repeated except that half the amount of MPD was substituted with Melamine and neat hexane was used for solubilisation of TMC. Additionally, the dissolution of the mixed amine was carried out at 70 °C and PSf membrane was dipped into the amine batch at 50 °C instead of at room temperature. The average flux and NaCl rejection were 37 $LM^{-2}h^{-1}$ and 93%, respectively, when the TMC concentration was 0.1% (w/v).

**Example 8**

The experiment of Example 7 was repeated raising the TMC concentration to 0.15% (w/v) to compensate for the lower reactivity of melamine. The average flux and NaCl rejection rose to 40 $LM^{-2}h^{-1}$ and 95%, respectively.

**Example 9**

The bacterial attachment experiment of Example 6 was repeated with the membranes of Example 2 and Example 8. When the experiments were conducted immersing the membranes in seawater containing the marine bacteria *Vibrio harveyi,* the bacterial attachment trend of Figure 3 was obtained. It can be seen that as in the case of a blend of PTC and TMC, a blend of MPD and melamine also gave superior anti-biofouling property compared to the conventionally prepared TFC membrane of Example 2.

**ADVANTAGES OF INVENTION**

1. Enhanced anti-biofouling property is bestowed on TFC RO membrane through use of acid chloride and amine monomers bearing pyridyl and triazole rings, respectively.
2. The conventional process and hardware are utilised in the invention which would make adaptation of the invention straightforward.
3. There is no deliberate addition of any catalyst in the process.
4. There is no adverse impact on the cost of the membrane especially in the case of Example 8 since melamine, if anything, is less expensive than MPD.
5. The enhanced anti-biofouling property is achieved without any significant adverse impact on the flux and rejection efficiency of the membranes.

**Claims**

**1.** A process for **preparing** thin film composite reverse osmosis membrane with enhanced antibiofouling property on a polysulfone support from polyfunctional acid chloride(s) and polyfunctional amine(s) in the ratio ranging between 3:1 to1:1 either in combination of two acid chloride monomers TMC (trimesyl chloride) and PTC (pyridine tricarboxylic acid) and one amine monomer MPD (m-phenylenediamine) or in combination of one acid chloride monomer TMC and two amine monomers MPD and melamine.

**2.** A process for **preparing** thin film composite reverse osmosis membrane with enhanced antibiofouling property on conventional polysulfone support membrane as claimed in claim 1, wherein with MPD as the amine monomer taken at 2% (w/v) concentration in water containing DMSO (lwt%) and glycerol (0,5wt%), a mixture of TMC and PTC taken in the weight ratio of 3:2 to 1:1 (w/w) and total concentration 0,1 % (w/v) in 93:7 (v/v) hexane : dichloromethane, a membrane was obtained having flux of 50-55 $LM^{-2}h^{-1}$ and NaCl rejection efficiency of 92-93%, which was similar to that of conventional TFC membrane with TMC as sole acid chloride, while exhibiting 10-1000 fold lower attachment of bacteria on the surface.

**3.** A process for **preparing** thin film composite reverse osmosis membrane with enhanced antibiofouling property on conventional polysulfone support membrane, as claimed in claim 1 wherein with TMC as the acid chloride monomer taken at 0.15% (w/v) concentration in hexane, a mixture of MPD and melamine taken in the weight ratio of 3:7 to 1 :1 (w/w) and total concentration of 2% (w/v) in water containing DMSO (l wt%) and glycerol (0.5wt %), a membrane

was obtained having flux of 40-45 $LM^{-2}.h^{-1}$ and NaCl rejection efficiency of 93-96%, which was similar to that of conventional TFC membrane with MPD as the sole amine, while exhibiting 10-100 fold lower attachment of bacteria on the surface.

**4.** A process for **preparing** thin film composite reverse osmosis membrane with enhanced antibiofouling property on conventional polysulfone support membrane as claimed in claim 1 wherein, thickness, water flux and molecular weight cut off of polysulfone support membrane used was in the range of 30-40 micrometer, 300-500 $LM^{-2}$ $h^{-1}$ and 120000-150000 g/ mol respectively.

**5.** A process for **preparing** thin film composite reverse osmosis membrane with enhanced antibiofouling property on conventional polysulfone support membrane as claimed in claim 1, wherein the total amine and total acid chloride concentrations is varied in the range of 1,5-2,5% (w/v) and 0, 1-0, 15% (w/v), respectively and the temperature of the acid chloride bath in the process was in the range of 25-35 °C

**6.** A process for preparing thin film composite reverse osmosis membrane with enhanced antibiofouling property on conventional polysulfone support membrane as claimed in claim 1, wherein the temperature of the amine bath in the process was in the range of 50-70 °C when melamine was incorporated as one of the amines and the bath temperature was ambient in other cases.

**7.** A process for **preparing** thin film composite reverse osmosis membrane with enhanced antibiofouling property on conventional polysulfone support membrane as claimed in claim 1, wherein the glycerol and DMSO concentrations in the amine bath in the process were in the range of 0,4-0,6% (w/v) and 0,8-1.2% (w/v) respectively.

**8.** A process for **preparing** thin film composite reverse osmosis membrane with enhanced antibiofouling property on conventional polysulfone support membrane TFC membranes as claimed in claim1, wherein the bacteria which exhibited reduced attachment in the membranes of the present invention include E. coli, B. *subtilis* and the marine bacteria Vibrio harveyi.

## Patentansprüche

**1.** Verfahren zur Herstellung einer Dünnschicht-Kompositumkehrosmosemembran mit verbesserter Anti-Biofoulingeigenschaft auf einem Polysulfonträger aus polyfunktionellem Säurechlorid/Säurechloriden und polyfunktionellem Amin(en) im Verhältnis im Bereich zwischen 3:1 und 1:1 entweder in Kombination von zwei Säurechloudmonomeren TMC (Trimesylchloud) und PTC (Pyridintricarbonsäure) und einem Aminmonomer MPD (m-Phenylendiamin) oder in Kombination von einem Säurechloudmonomer TMC und zwei Aminmonomeren MPD und Melamin.

**2.** Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei, mit MPD als Aminmonomer in einer 2 %-igen (Gew./Vol.) Konzentration in DMSO (1 Gew.-%) und Glycerin (0,5 Gew.-%) enthaltendem Wasser genommen, einer Mischung von TMC und PTC im Gewichtsverhältnis von 3:2 bis 1:1 (Gew./Gew.) und in einer Gesamtkonzentration von 0,1 % (Gew./Vol.) in 93:7 (Vol./Vol.) Hexan : Dichlormethan genommen, eine Membran erhalten wurde, die einen Flux von 50 - 55 $lm^{-2}h^{-1}$ und eine NaCl-Abweisungseffizienz von 92 - 93 % aufweist, was ähnlich denjenigen einer herkömmlichen TFC-Membran mit TMC als einzigem Säurechlorid war, während sie eine 10 - 1000-mal geringere Bakterienanhaftung an der Oberfläche aufwies.

**3.** Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei mit TMC als Säurechloridmonomer, in einer 15 %-igen (Gew./Vol.) Konzentration in Hexan genommen, einer Mischung von MPD und Melamin, im Gewichtsverhältnis von 3:7 bis 1:1 (Gew./Gew.) und in einer Gesamtkonzentration von 2 % (Gew./Vol.) in DMSO (1 Gew.-%) und Glycerin (0,5 Gew.-%) enthaltendem Wasser genommen, eine Membran erhalten wurde, die einen Flux von 40 - 45 $lm^{-2}$ $h^{-1}$ und eine NaCl-Abweisungseffizienz von 93 - 96 % aufweist, was ähnlich denjenigen einer herkömmlichen TFC-Membran mit MDP als einzigem Amin war, während sie eine 10 - 100-mal geringere Bakterienanhaftung an der Oberfläche aufwies.

**4.** Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei der Dicken-, Wasserflux- und Molekulargewichtgrenzwert der verwendeten Polysulfonträgermembran im Bereich von 30 - 40 Mikrometern,

300 - 500 $lm^{-2}h^{-1}$·bzw. 120000-150000 g/Mol betrug.

5. Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei die gesamten Amin- und gesamten Säurechloridkonzentrationen im Bereich von 1,2 - 2,5 % (Gew./Vol.) bis 0,1 - 0,15 % (Gew./Vol.) variierten und die Temperatur des Säurechloridbads bei dem Verfahren im Bereich von 25 - 35 °C lag.

6. Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei die Temperatur des Aminbads bei dem Verfahren im Bereich von 50 - 70 °C lag, als das Melamin als eines der Amine integriert wurde und die Badtemperatur in anderen Fällen die Umgebungstemperatur war.

7. Verfahren zur Herstellung einer Dünnschicht-Kompositumkehrosmosemembran mit verbesserter Anti-Biofoulingeigenschaft auf einer herkömmlichen Polysulfonträgermembran nach Anspruch 1, wobei die Glycerin- und DMSO-Konzentrationen in dem Aminbad bei dem Verfahren im Bereich von 0,4 - 0,6 % (Gew./Vol.) bzw. 0,8 - 1,2 % (Gew./Vol.) lagen.

8. Verfahren zur Herstellung einer Dünnschicht-Kompositumkehrosmosemembran mit verbesserter Anti-Biofoulingeigenschaft auf herkömmlichen Polysulfonträgeimembran-TFC-Membranen nach Anspruch 1, wobei die Bakterien, die eine reduzierte Anhaftung in den Membranen der vorliegenden Erfindung aufwiesen, E. coli, B. subtilis und die Meeresbakterie Vibrio hameyi umfassen.

## Revendications

1. Procédé de préparation d'une membrane d'osmose inverse composite à film mince présentant une propriété améliorée d'anti-encrassement biologique sur un support polysulfone à partir de chlorure(s) de poly(acide fonctionnel) et de poly(amine(s) fonctionnelle(s)) sous le rapport s'étendant entre 3:1 à 1:1 soit en combinaison de deux monomères chlorure d'acide TMC (chlorure de trimésyle) et de PTC (acide pyridine tricarboxylique) et d'un monomère amine MPD (m-phénylènediamine) soit en combinaison d'un monomère chlorure d'acide TMC et de deux monomères amines MPD et de mélamine.

2. Procédé de préparation d'une membrane d'osmose inverse composite à film mince présentant une propriété améliorée d'anti-encrassement biologique sur la membrane classique à support polysulfone tel que revendiqué selon la revendication 1, où avec le MPD comme monomère amine pris à une concentration de 2 % (en pds/vol) dans de l'eau contenant du DMSO (1 % en pds) et du glycérol (0,5 % en pds), un mélange de TMC et de PTC pris sous le rapport en poids de 3:2 à 1:1 (en pds/pds) et une concentration totale de 0,1 % (en pds/vol) sous un rapport de 93:7 (en vol/vol) d'hexane:dichlorométhane, on a obtenu une membrane ayant un flux de 50 à 55 $LM^{-2}h^{-1}$ et une efficacité de rejet de NaCl de 92 à 93 %, qui était semblable à celle de la membrane classique de TFC avec du TMC comme unique chlorure d'acide, tout en faisant preuve d'une fixation moindre de 10 à 1 000 fois des bactéries sur la surface.

3. Procédé de préparation d'une membrane d'osmose inverse composite à film mince présentant une propriété améliorée d'anti-encrassement biologique sur la membrane classique à support polysulfone, tel que revendiqué selon la revendication 1 où avec le TMC comme monomère chlorure d'acide pris à une concentration de 0,15 % (en pds/vol) dans de l'hexane, un mélange de MPD et de mélamine pris sous le rapport en poids de 3:7 à 1:1 (en pds/pds) et une concentration totale de 2 % (en pds/vol) dans de l'eau contenant du DMSO (1 % en pds) et du glycérol (0,5 % en pds), on a obtenu une membrane ayant un flux de 40 à 45 $LM^{-2}h^{-1}$ et une efficacité de rejet de NaCl de 93 à 96 %, qui était semblable à celle de la membrane classique de TFC avec du MPD comme unique amine, tout en faisant preuve d'une fixation inférieure des bactéries de 10 à 100 fois sur la surface.

4. Procédé de préparation d'une membrane d'osmose inverse composite à film mince présentant une propriété améliorée d'anti-encrassement biologique sur la membrane classique à support polysulfone tel que revendiqué selon la revendication 1 où, l'épaisseur, le flux d'eau et le seuil de poids moléculaire de la membrane à support polysulfone utilisée se situaient respectivement dans la plage de 30 à 40 micromètres, 300 à 500 $LM^{-2}h^{-1}$ et 120 000 à 150 000 g/mole.

5. Procédé de préparation d'une membrane d'osmose inverse composite à film mince présentant une propriété améliorée d'anti-encrassement biologique sur la membrane classique à support polysulfone tel que revendiqué selon

la revendication 1, où les concentrations totales en amine et en chlorure d'acide total varient dans la plage respectivement de 1,5 à 2,5 % (en pds/vol) et de 0,1 à 0,15 % (en pds/vol), et la température du bain de chlorure d'acide dans le procédé se situait dans la plage de 25 à 35°C.

**6.** Procédé de préparation d'une membrane d'osmose inverse composite à film mince présentant une propriété améliorée d'anti-encrassement biologique sur la membrane classique à support polysulfone tel que revendiqué selon la revendication 1, où la température du bain d'amine dans le procédé se situait dans la plage de 50 à 70°C lorsque la mélamine était incorporée comme l'une des amines et que la température du bain était ambiante dans les autres cas.

**7.** Procédé de préparation d'une membrane d'osmose inverse composite à film mince présentant une propriété améliorée d'anti-encrassement biologique sur la membrane classique à support polysulfone tel que revendiqué selon la revendication 1, où les concentrations de glycérol et de DMSO dans le bain d'amine dans le procédé se situaient dans la plage respectivement de 0,4 à 0,6 % (en pds/vol) et de 0,8 à 12 % (en pds/vol).

**8.** Procédé de préparation d'une membrane d'osmose inverse composite à film mince présentant une propriété améliorée d'anti-encrassement biologique sur les membranes TFC de type membranes classiques à support polysulfone tel que revendiqué selon la revendication 1, où les bactéries qui faisaient preuve de fixation réduite dans les membranes de la présente invention comprennent *E. coli, B. subtils* et la bactérie marine *Vibo harveyi.*

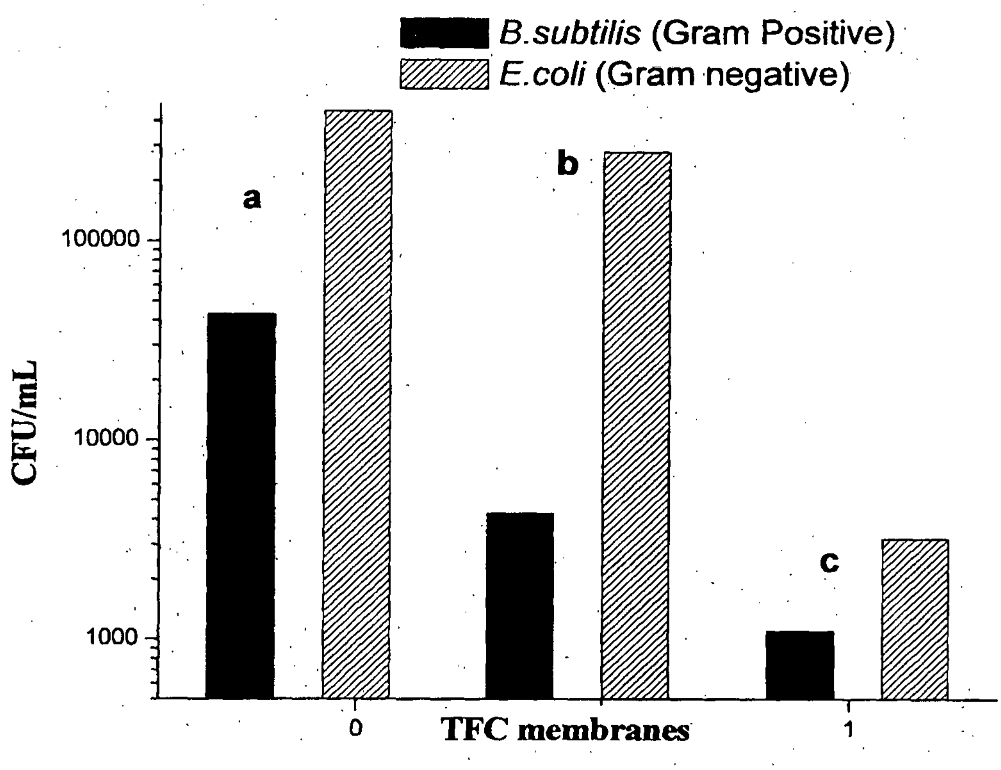
B.subtilis (Gram Positive)
E.coli (Gram negative)
a
b
c
100000
10000
1000
CFU/mL
0
TFC membranes
1

Figure 1

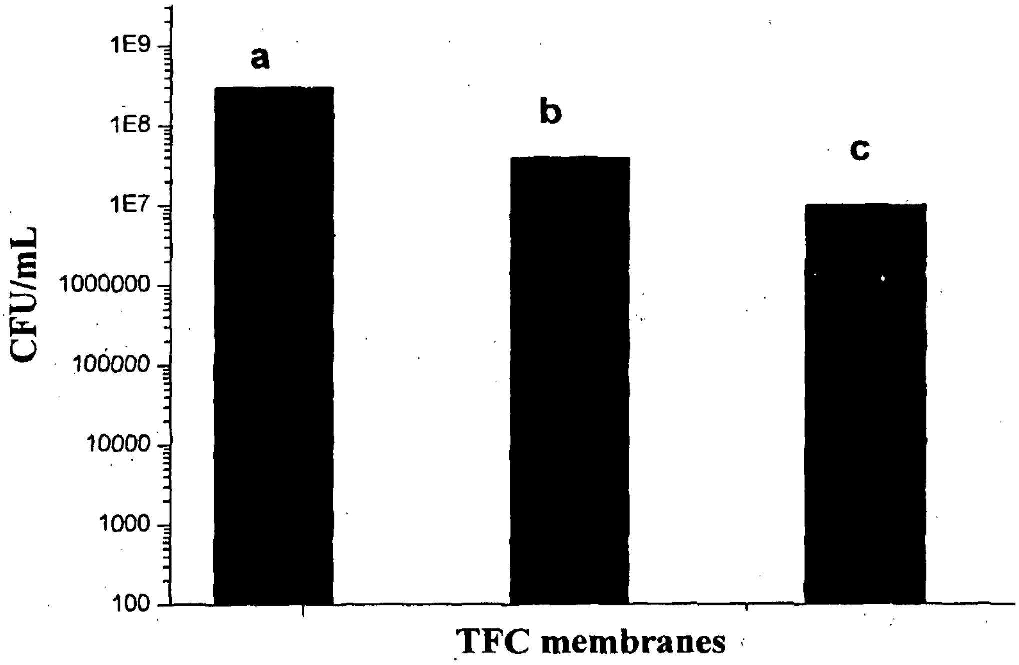

a
b
c
1E9
1E8
1E7
1000000
100000
10000
1000
100
CFU/mL
TFC membranes


Figure 2

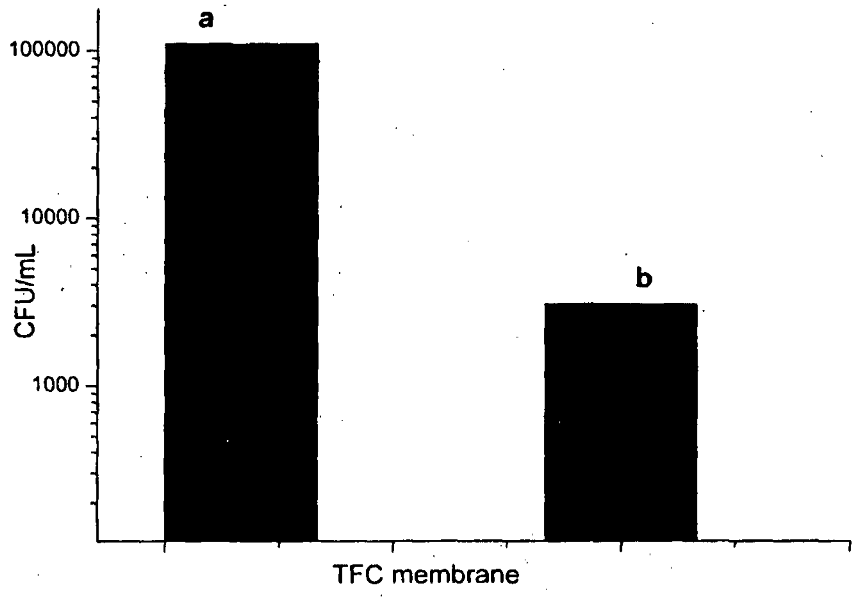


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007035019 A
- US 7081202 B
- US 682727 A
- US 5254261 A
- US 5876602 A
- US 4913816 A
- US 5693227 A
- US 20070039874 A1
- AU 201200036
- US 5160619 A


### Non-patent literature cited in the description


- **RUNLIN HAN.** *Journal of Membrane Science,* 2013, vol. 425-426, 176-181
- **FLEMMING.** *Exp. Therm. Fluid Sci.,* 1997, vol. 14, 382-391
- **AHMAD.** *Desalination,* 2000, vol. 132, 173-179
- **SCHNEIDER.** *J. Membr. Sci.,* 2005, vol. 261, 152-162
- **HERZBERG.** *J. Membr. Sci.,* 2007, vol. 295, 11-20
- **ESHED.** *Appl. Environ. Microbiol.,* 2008, vol. 74, 7338-7347
- **BELFER.** *J. Membr. Sci.,* 1998, vol. 139, 175-181
- **SARKAR.** *J. Membr. Sci.,* 2010, vol. 349, 421-428
- **SAGLE.** *J. Membr. Sci.,* 2009, vol. 340, 92-108
- *Environ. Sci. Technol.,* 2011, vol. 45, 5973-5980